Europäisches Patentamt

European Patent Office

Office européen des brevets

(19)

(11) Veröffentlichungsnummer : **0 129 809**
**B1**

(12) # EUROPÄISCHE PATENTSCHRIFT

(45) Veröffentlichungstag der Patentschrift :
07.06.89

(51) Int. Cl.⁴ : **C 09 J   7/02**

(21) Anmeldenummer : 84106903.2

(22) Anmeldetag : 16.06.84

(54) **Schaumfolie und Klebeband mit geschäumtem Träger.**

(30) Priorität : 25.06.83 DE 3323018

(43) Veröffentlichungstag der Anmeldung :
02.01.85 Patentblatt 85/01

(45) Bekanntmachung des Hinweises auf die Patenterteilung : 07.06.89 Patentblatt 89/23

(84) Benannte Vertragsstaaten :
AT BE CH DE FR GB IT LI NL SE

(56) Entgegenhaltungen :
EP-A- 0 040 480
FR-A- 2 242 450
GB-A- 2 097 403
JP-A- 1 287 876
CHEMICAL ABSTRACTS, Band 84, 1976, Seite 54, Nr.
136736m, Columbus, Ohio, US;& JP - A - 76 12 878
Die Akte enthält technische Angaben, die nach dem
Eingang der Anmeldung eingereicht wurden und die
nicht in dieser Patentschrift enthalten sind.

(73) Patentinhaber : **Beiersdorf Aktiengesellschaft
Unnastrasse 48
D-2000 Hamburg 20 (DE)**

(72) Erfinder : **Schmeer, Gert, Dipl.-Ing.
Tannenweg 32a
D-8221 Bergen (DE)**
Erfinder : **Engelmann, Eberhard, Dr. Dipl.-Chem.
Lauterberger Weg 24
D-2000 Hamburg 61 (DE)**
Erfinder : **Schäfer, Karl
Moltkestrasse 53
D-2000 Hamburg 20 (DE)**

EP 0 129 809 B1

**Beschreibung**

Gegenstand der Erfindung sind eine Schaumfolie sowie ein Klebeband mit einem geschäumtem Träger aus einem senkrecht zur Bahnrichtung stärker als in Bahnrichtung gerecktem, Polypropylen mit hohem isotaktischem Anteil als Hauptkomponente enthaltendem Material.

Aus JP-A-12878/76 ist ein nichtklebendes, geschäumtes und gerecktes Polypropylenband, das als Bindematerial und Geschenkband dient, bekannt. Es besteht aus Polypropylenhomopolymerisat und enthält keine weiteren polymeren Zusätze.

Weiterhin sind aus der deutschen Patentschrift 24 40 286 bereits druckempfindliche Klebebänder mit biaxial gereckten Polyolefinfolienträgern bekannt, die in Querrichtung stärker als in Längsrichtung gereckt sind. Dabei kann das Reckverhältnis in Querrichtung um ein Mehrfaches größer sein als das Längsreckverhältnis. Solche Folien sollen sich in Querrichtung leicht mit der Hand reißen lassen. Die Dichte der Folien liegt über 0,9 g/cm³. Diese Klebebänder sollen sich weiterhin durch spezielle Festigkeitseigenschaften auszeichnen, die notwendig sind für die Herstellung und Verwendung solcher Bänder. So soll die Trägerfolie eine Zugfestigkeit in Längsrichtung von mehr als 170 kg/cm², eine Reißfestigkeit in Querrichtung von mehr als 800 kg/cm² und eine Bruchdehnung in Längsrichtung von mehr als 200 % aufweisen. Folien mit einer Bruchdehnung in Längsrichtung von weniger als 200 % lassen sich gemäß der DE-PS 24 40 286 nicht mehr von der Klebebandrolle abwickeln, weil das Band dabei bricht.

Es hat sich gezeigt, daß diese Klebebänder in der Praxis nicht immer befriedigende Eigenschaften besitzen. So können sie nur unter Schwierigkeiten in Querrichtung mit der Hand eingerissen werden, da die Festigkeits- und Dehnungswerte zu hoch liegen.

Aufgabe der Erfindung ist es, Klebebänder mit einem Trägermaterial zu schaffen, die sich senkrecht zur Bahnrichtung wie Papier oder sogar ohne Hilfsmittel kantengerade reißen lassen, sich aber in Bahnrichtung von Hand nicht einreißen lassen oder wenigstens schwerer einreißen lassen als senkrecht zur Bahnrichtung. Sie sollen senkrecht zur Bahnrichtung eine Zugfestigkeit aufweisen, die oberhalb der Festigkeit imprägnierter Papiere liegt, und in Bahnrichtung noch eine ausreichende Festigkeit und Schlagzugzähigkeit besitzen, um maschinell auf- und abgewickelt werden zu können. Gleiches gilt für das Trägermaterial.

Ferner soll der Träger einen papierähnlichen Griff und eine Steifigkeit besitzen, die der Steifigkeit von Papier gleicht und die größer ist als die von Folien. Verglichen mit Papier soll das Trägermaterial einen niedrigeren Preis besitzen und unempfindlich gegenüber Feuchtigkeit sein.

Das Trägermaterial soll in voller Breite oder auch nur partiell in Bahnrichtung verlaufenden Streifen mit druckempfindlicher oder auch heißsiegelbarer Klebemasse und auf der Rückseite in entsprechender Weise mit einer Trennlackierung beschichtet werden können. Dem zu Rollen anwendungsgemäßer Breite gewickelten, beschichteten Trägermaterial sollen beim Abwickeln durch Schneiden oder Stanzen senkrecht zur Bahnrichtung Streifen oder Abschnitte entnommen werden, die in der ursprünglichen senkrecht zur Bahnrichtung verlaufenden Richtung des Trägermaterials belastbar sind und z. B. als verklebbarer Tragegriff, als verklebbarer Befestigungsstreifen eines Windelhöschenverschlusses oder als verklebbarer Befestigungsstreifen anderer Verschlußsysteme dienen können. Durch die Orientierung der erfindungsgemäßen Klebestreifen soll bei einem maschinellen Spendevorgang des Streifens eine Erniedrigung der Taktzeiten ermöglicht werden, da die Vorschublänge nur der Querabmessung des Streifens entsprechen muß.

Eine weitere Verwendungsmöglichkeit der erfindungsgemäßen Klebebänder soll dort bestehen, wo ein kantengerades, sauberes Abtrennen des Klebebandmaterials von Hand ohne Benutzung irgendwelcher Hilfsmittel (Messer- oder Zahnleisten, Perforationen) gefordert wird. Diese Forderung gilt zum Beispiel für die sogenannten Kleider- oder Fusselrollen, die von den üblicherweise verwendeten Fusselrollen mit Papierträgermaterial nur unvollkommen erfüllt wird.

Nicht beschichtetes Trägermaterial soll als Verpackungs- oder Isoliermaterial benutzt werden können. Nur mit einer Trennschicht versehenes Trägermaterial soll als Abdeck- oder Trennfolie für klebende Produkte verwendet werden können.

Diese Aufgabe wird gelöst durch eine Schaumfolie aus einem senkrecht zur Bahnrichtung stärker als in Bahnrichtung gerecktem, Polypropylen mit hohem isotaktischem Anteil als Hauptkomponente enthaltendem Material, die dadurch gekennzeichnet ist, daß das Material geschäumt ist, einen Schlagzähzusatz mit einem Anteil von 1-25 Gewichtsprozent, bezogen auf den gesamten Polymeranteil, enthält und das Reckverhältnis in Bahnrichtung 1 : 1 bis 1 : 4 und senkrecht zur Bahnrichtung 1 : 3 bis 1 : 8 beträgt, wobei das Reckverhältnis senkrecht zur Bahnrichtung größer ist als das Reckverhältnis in Bahnrichtung und die Dichte 0,4-0,75 g/cm³ beträgt.

Insbesondere wird die Aufgabe gelöst durch ein Klebeband mit einem senkrecht zur Bahnrichtung stärker als in Bahnrichtung gerecktem, Polypropylen mit hohem isotaktischem Anteil als Hauptkomponente enthaltendem geschäumtem Trägermaterial, das mit mindestens einer druckempfindlichen oder heißsiegelbaren Klebeschicht versehen ist, und das dadurch gekennzeichnet ist, daß das Trägermaterial geschäumt ist, einen Schlagzähzusatz mit einem Anteil von 1-25 Gewichtsprozent, bezogen auf den gesamten Polymeranteil, enthält und das Reckverhältnis in Bahnrichtung 1 : 1 bis 1 : 4 und senkrecht zur Bahnrichtung 1 : 3 bis 1 : 8 beträgt, wobei das Reckverhältnis senkrecht zur Bahnrichtung größer ist als das Reckverhältnis in Bahnrichtung und die Dichte 0,4-0,75 g/cm³ beträgt.

Das Reckverhältnis gibt an, auf das Wievielfache die ursprüngliche Länge oder Breite des Trägers durch den Reckvorgang verlängert oder verbreitert wird. Für den Ansdruck « Bahnrichtung » sind auch andere Formulierungen bekannt, beispielsweise : Längsrichtung, Maschinenlaufrichtung. Im Begriff « senkrecht zur Bahnrichtung », auch Querrichtung genannt, ist die Senkrechte gemeint, die in der Bahnebene liegt.

Für die erfindungsgemäßen geschäumten Klebebandträgermaterialien sind die Reckverhältnisse in Bahnrichtung bzw. senkrecht zur Bahnrichtung von großer Bedeutung. Vorzugsweise beträgt das Reckverhältnis in Bahnrichtung mindestens 1 : 1,1, insbesondere aber 1 : 2 bis 3. Bevorzugt sind senkrecht zur Bahnrichtung Reckverhältnisse von 1 : 4 bis 6. Besonders bevorzugt werden Trägermaterialien, die senkrecht zur Bahnrichtung etwa 2- bis 3-fach so stark gereckt sind wie in Bahnrichtung, insbesondere für Klebebänder. Auch in Bahnrichtung nicht gereckte Träger sind Gegenstand der Erfindung.

Für bestimmte Anwendungszwecke werden in besonderer Weise aufeinander abgestimmte Reckverhältnisse in Bahnrichtung und senkrecht zur Bahnrichtung bevorzugt. So sind für Tragegriffverstärkungen und Befestigungsstreifen von Höschenwindelverschlüssen niedrige Reckverhältnisse in Bahnrichtung und hohe Reckverhältnisse senkrecht zur Bahnrichtung besonders günstig.

Für trennbeschichtetes Abdeckmaterial ist dagegen ein höheres Reckverhältnis in Bahnrichtung zweckmäßig.

Das erfindungsgemäß verwendete Polypropylen ist isotaktisches Polypropylen oder Polypropylen mit hohem isotaktischen Anteil, insbesondere über 70 %. Der Polypropylenanteil kann bis zu 98 % betragen.

Weiterhin können Polypropylen-Copolymere eingesetzt werden. Es können statistische und auch Blockcopolymere verwendet werden. Bevorzugt werden Copolymerisate aus Propylen und Olefinen, wobei der Olefinanteil vorzugsweise bis zu 20 % beträgt. Besonders bevorzugt werden Propylen-Äthylen-Copolymere eingesetzt, die bis zu 20 % Äthylen copolymerisiert enthalten.

Ferner können Mischungen von Polypropylen mit den Polypropylen-Copolymeren, insbesondere den Copolymeren aus Propylen und Äthylen, verwendet werden. Mischungen von Polypropylen und/oder Polypropylen-Copolymeren mit Polyäthylen, vorzugsweise Hochdruckpolyäthylen, sind insbesondere geeignet. Der Polyäthylenanteil kann bis 30 % betragen. Statt Polyäthylen können auch EPM, EPDM oder Polyisobutylen oder Mischungen dieser Polymeren, auch im Gemisch mit dem Polyäthylen, eingesetzt werden. Vorzugsweise beträgt der Anteil von Polyäthylen, EPM, EPDM oder Polyisobutylen oder deren Gemischen 2-30 %, insbesondere 5-10 %.

Den genannten Polymeren oder Polymergemischen können vorzugsweise weitere Polymere oder Polymergemische zugesetzt sein, die im folgenden als Schlagzähzusatz bezeichnet werden. Gegenstand der Erfindung sind daher sowohl Träger mit einem Gehalt dieser Polymeren als auch solche ohne diesen Zusatz. Vorzugsweise beträgt der Anteil 1 bis 25 %, bezogen auf den gesamten Polymeranteil. Besonders bevorzugt wird ein Zusatz von Äthylen-Vinylacetat-Copolymeren (EVA), insbesondere bis zu einem Anteil von 15 %. Weiterhin wird ein Zusatz von Butadien-Styrol-Blockcopolymerisaten (SBR) oder ähnlichen, die Schlagzähigkeit erhöhenden Zusätzen wie thermoplastischen Kautschuken, insbesondere SIR, und den Copolymerisaten dieser Polymere und deren Mischungen, auch im Gemisch mit Butadien-Styrol-Blockcopolymerisaten, bevorzugt, insbesondere bis zu einem Gewichtsanteil bis zu 20 %.

Besonders bevorzugt wird eine Kombination von den Äthylen-Vinyl-acetat-Copolymeren mit den Butadien-Styrol-Blockcopolymerisaten und/oder den genannten Schlagzähzusätzen. Der Gewichtsanteil dieser Kombination beträgt vorzugsweise bis zu 25 % der Gesamtmischung.

Bei der Verarbeitung von Polypropylen und Rohstoffmischungen die zu über 95 % aus Polypropylen bestehen, werden Reckverhältnisse bevorzugt, die als Produkt ihrer Reckzahlen in Bahnrichtung mal der Reckzahl senkrecht zur Bahnrichtung nicht mehr als etwa 9 ergeben, wobei die Reckzahl in Bahnrichtung zweckmäßigerweise nur wenig unter der Reckzahl senkrecht zur Bahnrichtung liegt, z. B. die Reckverhältnisse in Bahnrichtung 1 : 2,5 und senkrecht zur Bahnrichtung 1 : 3.

Bei der Verarbeitung von Copolymerisaten mit Äthylen oder anderen Olefinen oder von Mischungen, die zu weniger als 95 % aus Polypropylen bestehen, werden Reckverhältnisse bevorzugt, die als Produkt ihrer Reckzahlen in Bahnrichtung mal den Reckzahlen senkrecht zur Bahnrichtung Werte größer als etwa 9 ergeben. Mit schlagzäh modifizierten Mischungen lassen sich Reckverhältnisse erreichen, die als Produkt ihrer Reckzahlen in Bahnrichtung mal den Reckzahlen senkrecht zur Bahnrichtung Werte größer als etwa 12 bis zu etwa 20 ergeben. Je mehr der Schlagzähzusatz durch andere Mischungsbestandteile ersetzt wird, umso mehr nimmt das Produkt der Reckzahlen vorzugsweise einen etwas kleineren Wert an.

Vorteilhafterweise besitzen Befestigungsstreifen für Höschenwindelverschlüsse und Tragegriffe einen Träger mit einem Schlagzähzusatz.

Dem für die Herstellung der erfindungsgemäßen Träger geeigneten Polymer wird ein Treibmittel (Blähmittel) zugemischt, das beim Erhitzen durch Zersetzung Gase freigibt. Geeignet sind insbesondere unter Normalbedingungen feste Verbindungen oder Systeme. Besonders bevorzugt werden Treibmittel auf der Basis von Citronensäure/Natriumhydrogencarbonat, die z. B. unter der Bezeichnung Hydrocerol im Handel erhältlich sind, und Azodicarbonamid. Weitere geeignete Treibmittel sind : β-Naphthalinsulfonsäurehydrazid, Diphenylsulfon-3,3'-disulfonylhydrazid, Benzol-1,3-disulfonsäurehydrazid, Benzolsulfon-

3

säure-N-phenylhydrazid, Natriumbicarbonat/Melamin, p,p'-Oxy-bis-benzolsulfonylhydrazid, Natriumcarbonat/Citronensäure, Harnstoff/Biuret 1,6-Di-n-decyl-azobisformamid und Diphenyl-4,4'-di-(sulfonylazid).

Das Treibmittel ist vorzugsweise mit einem Gewichtsanteil von 0,5 bis 4 %, insbesondere von 1 bis 3 % in dem Gemisch enthalten.

Die Dichte der geschäumten Träger beträgt insbesondere 0,4 bis 0,75 g/cm³, vorzugsweise 0,45 bis 0,65 g/cm³.

Die Dicke der geschäumten, ungereckten Träger kann erwa 0,075 bis 10 mm, insbesondere 0,25 bis 2,5 mm betragen und ist im Hinblick auf die gawählten Reckverhältnisse abzustimmen. Abhängig vom Anwendungszweck können die geschäumten und gereckten Träger insbesondere eine Dicke von 25 bis 500 µm besitzen.

Die erfindungsgemäßen Träger sind gleichmäßig verstreckt und von konstanter Dicke. Sie sind gleichmäßig von bis zu 30 µm hohen, entsprechend den Reckverhältnissen orientierten, geschlossenen Poren durchsetzt. Die Oberfläche ist geschlossen und leicht genarbt bzw. fein strukturiert.

Die erfindungsgemäßen Träger können analog zu üblichen Verfahren erhalten werden. Die schaumfähige Mischung aus Polymeren und dem Treibmittel wird in einen Extruder eingebracht, im Extruder erhitzt, als Bahn extrudiert und aufgeschäumt. Die geschäumte Bahn wird nach bekannten Methoden mit den in Anspruch 1 angegebenen Reckverhältnissen gereckt. Vorzugsweise erfolgt das Recken auf einem Breitstreckrahmen. Dabei wird überlicherweise nach dem Recken in Bahnrichtung anschließend senkrecht zur Bahnrichtung gereckt. Es ist aber auch möglich, zunächst senkrecht zur Bahnrichtung und dann in Bahnrichtung zu recken.

Mit den so erhaltenen Trägern können Klebebänder hergestellt werden, indem ein- oder beidseitig eine an sich bekannte, druckempfindliche oder heißsiegelbare Klebemasse aufgebracht wird. Die Klebebandrückseite ist vorzugsweise auch mit einer klebstoffabweisenden Schicht versehen, z. B. wenn ein mit druckempfindlicher Klebemasse beschichtetes Klebeband zu Rollen aufgewickelt werden soll. Um die Verankerung der Beschichtungen zu verbessern, kann die Oberfläche der Trägerfolien mit Methoden wie man sie für Polyolefinfolien-Oberflächen üblicherweise anwendet, vorbehandelt werden. Auch Verankerungsschichten können aufgebracht werden.

Die erfindungsgemäßen Klebebänder besitzen neben den in der Aufgabenstellung geforderten Qualitäten vorzugsweise die folgenden Eigenschaften :

1) Die Zugfestigkeit in Bahnrichtung beträgt mehr als 5 N/mm², vorzugsweise mehr als 8 N/mm².

2) Die Zugfestigkeit senkrecht zur Bahnrichtung beträgt mehr als 20 N/mm², vorzugsweise mehr als 25 N/mm².

3) Die Bruchdehnung in Bahnrichtung liegt unter 100 %, vorzugsweise unter 60 %.

4) Die Bruchdehnung senkrecht zur Bahnrichtung liegt unter 80 %, vorzugsweise unter 40 %.

Die Meßwerte 1 bis 4 werden im Zug-Dehnungsversuch gemäß DIN 53 455 bei 300 mm/min Prüfungsgeschwindkeit ermittelt.

5) Die Schlagzugzähigkeit in Bahnrichtungbeträgt mehr als 30 mJ/mm², vorzugsweise mehr als 50 mJ/mm².

6) Die Schlagzugzähigkeit senkrecht zur Bahnrichtung beträgt mehr als 60 mJ/mm², vorzugsweise mehr als 100 mJ/mm².

Die Meßwerte 5 und 6 werden im Schlagzugversuch gemäß DIN 53 448, jedoch an 15 mm breiten Prüfstreifen ermittelt.

7) Der Weiterreißwiderstand mit Rißverlauf in Bahnrichtung beträgt mehr als 20 N/mm, vorzugsweise mehr als 30 N/mm.

8) Der Weiterreißwiderstand mit Rißverlauf senkrecht zur Bahnrichtung beträgt weniger als 30 N/mm, vorzugsweise weniger als 20 N/mm.

Die Meßwerte 7 und 8 werden gemäß DIN 53 363 ermittelt.

9) Der Einreißwiderstand eines Klebebandes mit einem 100 µm starken Trägermaterial beträgt an einer Schnittkante in Bahnrichtung weniger als 12 N, vorzugsweise weniger als 8 N.

10) Der Einreißwiderstand eines Klebebandes mit einem 100 µm starken Trägermaterial beträgt an einer Schnittkante senkrecht zur Bahnrichtung mehr als 12 N, vorzugsweise mehr als 15 N.

Die Meßwerte 9 und 10 wurden mit dem sogenannten « MPA »-Gerät (Einreißgerät des Materialprüfungsamtes Berlin-Dahlem) ermittelt.

11) Beim Biegeversuch nach Schlenker an einer 19 mm breiten Probe und mit 30 % Biegewinkel wird für ein Klebeband mit einem 100 µm starken Trägermaterial bei Krümmung senkrecht zur Bahnrichtung ein Biegemoment von mehr als 1 cN cm, vorzugsweise von mehr als 3 cN cm benötigt.

12) Beim Biegeversuch wie unter 11, aber bei Krümmung in Bahnrichtung wird ein Biegemoment von mehr als 0,5 cN cm, vorzugsweise von mehr als 1 cN cm benötigt.

Die Meßwerte 11 und 12 werden mit einem Biegesteifigkeitsprüfer nach Schlenker, (hergestellt von der Firma Franck) ermittelt.

Überraschenderweise zeigt sich, daß sich die erfindungsgemäßen Klebebänder aus Trägermaterial mit den aufgeführten Eigenschaften einwandfrei von der Rolle abziehen und verarbeiten lassen. Die erfindungsgemäßen Klebebänder lassen sich senkrecht zur Bahnrichtung leicht mit der Hand reißen und vorteilhaft mit der Maschine schneiden. Griff und Steifigkeit des Trägers entsprechen den von Papier bekannten Eigenschaften. Weiterhin ist er unempfindlich gegenüber Feuchtigkeit.

Aufgrund der speziellen Festigkeitseigenschaften des erfindungsgemäßen Trägers eignen sich die Klebebänder insbesondere zur Herstellung von Tragegriffen bzw. Verstärkungen dafür oder für Befestigungsstreifen für Höschenwindelverschlüsse. Dabei ist es besonders vorteilhaft, daß sich insbesondere schmale, streifenförmige Artikel von der Bahn maschinell schnell und sauber quer zur Bahnrichtung (Maschinenlaufrichtung) schneiden lassen. Die Länge dieser Streifen ist dann gleich der Breite der ursprünglichen Bahn.

Weiterhin kann der Träger aufgrund seiner glatten, geschlossenen Oberfläche mit geeigneten Druckfarben hervorragend bedruckt werden. Besonders vorteilhaft können sich in der Maschinenrichtung wiederholende Aufdrucke, die sich über die Breite erstrecken, aufgebracht werden, die dann auf dem streifenförmigen Artikel (nach dem Schneiden senkrecht zur Bahnrichtung) in genau passender Länge, in der (neuen) Längsrichtung des Streifens verlaufend, erscheinen.

Der Klebstoff kann in Maschinenrichtung auch partiell, z. B. streifenförmig aufgetragen werden, wobei die Streifen in Bahnrichtung verlaufen. Senkrecht zur Bahnrichtung betrachtet folgen klebstofffreie und klebende Bereiche aufeinander. Auf den streifenförmigen Abschnitten die nach dem Schneiden senkrecht zur Bahnrichtung gebildet werden, wechseln dann, in (neuer) Längsrichtung des Streifens betrachtet, klebstofffreie und klebende Zonen einander ab.

Solche Aufdrucke oder partielle Beschichtungen lassen sich auf solche streifenförmige Abschnitte, die aus überwiegend in Bahnrichtung gereckten Trägern hergestellt wurden, nicht oder nur mit sehr aufwendigen Anlagen anbringen.

Die erfindungsgemäßen Klebebänder sind auch hervorragend für Fusselrollen geeignet, da verbrauchte Klebebandteile mühelos mit der Hand abgerissen werden können. Das Abreißen erleichternde Perforationen sind nicht erforderlich.

Gegenstand der Erfindung sind auch die mit dem erfindungsgemäßen Trägermaterial erhältlichen Tragegriffe und Verstärkungen dafür, Befestigungsstreifen für Höschenwindelverschlüsse und Fusselroller sowie Abdeck- und Trennmaterialien und die Verwendung der Träger für diese Zwecke. Weiterhin sind auch die Herstellung der erfindungsgemäßen Träger sowie die Herstellungsverfahren für die obengenannten, durch Querschneiden senkrecht zur Bahnrichtung erhältlichen Abschnitte, Gegenstand der Erfindung.

Klebstofffreie, gegebenenfalls mit einem Trennlack versehene Träger sind weiterhin hervorragend geeignet zur Abdeckung von Selbstklebeschichten oder als Trennzwischenlagen. Sie können auch als Abdeck- sowie Isoliermaterialien oder Verpackungsmaterial verwendet werden. Gegenstand der Erfindung ist daher auch das nicht beschichtete, geschäumte und gereckte Trägermaterial.

Alle Mengenangaben, Anteile und Prozentanteile sind auf das Gewicht bezogen.

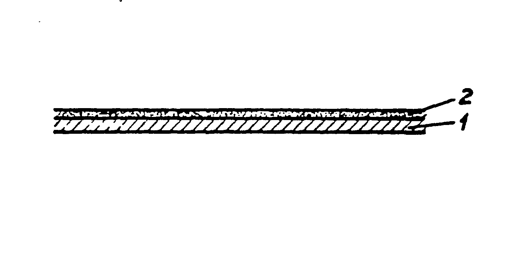

In der Zeichnung ist eine Ausführungsform des erfindungsgemäßen Klebebandes im Querschnitt dargestellt. Der Träger 1 ist mit der Klebemasse 2 beschichtet.

Die folgenden Beispiele dienen zur Erläuterung der Erfindung :

In den Beispielen wurden Trennmittel, Kleber und Primer folgender Zusammensetzung verwendet :

Als Trennmittel wurde ein handelsübliches Silikontrennmittel aus der Klasse der kondensationsvernetzenden Zweikomponenten-Systeme verwendet. Die Vernetzung wurde mit Dibutylzinnmaleinat katalysiert. Die Trennsubstanz wurde als 5 %ige Lösung in Toluol mit einer Rakel aufgetragen. Die Beschichtungsstärke (trocken) betrug 0,2 g/m².

Der Klebstoff bestand aus

42 Gew.-Tln. Styrol-Isopren-Blockcopolymerisat (SIS)

20 Gew.-Tln. Pentaerythritester des hydrierten Kolophoniums

37 Gew.-Tln. aliphatischem Kohlenwasserstoffharz, Erweichungspunkt 85 °C,

1 Gew.-Tl. Zinkdibutyldithiocarbamat.

Der Klebstoff wurde als 40 %ige Lösung in Toluol mit anschließender Trocknung aufgetragen. Der Kleberauftrag betrug 30-35 g/m². Auch der Auftrag aus der Schmelze ist möglich.

Auf die Verwendung einer speziellen Verankerungsschicht zwischen Träger und Klebstoff konnte verzichtet werden. Selbstverständlich sind die dem Stand der Technik entsprechenden Polypropylen-Primer einsetzbar.

Beispiel 1

75 Gewichtsteile granuliertes PP/PE-Blockcopolymerisat (Schmelzindex 230/2.16 : 5 g/10 min), 5 Gewichtsteile Polyäthylen niedriger Dichte mit einem Schmelzindex 190/5 von 2-5 g/10 min, 5 Gewichtsteile Äthylen-Vinylacetat-Copolymerisat (EVA gemäß nachstehender Definition) und 15 Gewichtsteile Styrol-Butadien-Blockcopolymerisat (SBR gemäß nachstehender Definition) werden gut gemischt. Dazu werden zweckmäßigerweise die drei zuletzt genannten Komponenten mit einer kleinen Menge der ersten Komponente im Mischextruder vorgemischt und anschließend granuliert. Das erhaltene Granulat wird mit dem verbliebenen PP/PE-Granulat und 1,5 Gewichtsteilen des Treibmittels auf der Basis von Citronensäure/Natriumhydrogencarbonat (Hydrocerol), gemischt. Diese Mischung wird als geschäumte Bahn von etwa 1 000 µm aus einem üblichen Extruder auf eine Kühlwalze extrudiert.

Diese Schaumbahn wird auf einer Walzenreckanlage in Bahnrichtung bei Temperaturen zwischen 110° und 155 °C im Reckverhältnis 1 : 2 gereckt. Die Dicke der gereckten Bahn beträgt etwa 550 µm.

Anschließend wird die Materialbahn einem Breitstreckrahmen zugeführt und bei Temperaturen von 135 °C-160 °C im Verhältnis 1 : 6 senkrecht zur Bahnrichtung gereckt. Die Dicke des Trägers beträgt etwa 90-110 µm. Er hat eine Dichte von etwa 0,5 g/cm³.

Die so erhaltenen geschäumten, unbeschichtete Träger können als Isolier- oder Verpackungmaterial verwendet werden. Gewünschte Längen lassen sich leicht abreißen.

Zur Herstellung von Klebebändern wird der Träger nach Kantenbeschnitt beidseitig durch Koronavorbehandlung auf eine Benetzungsspannung von 40 mN/m gebracht. Der Träger wird dann auf einer Seite mit der oben angegebenen Klebemasse beschichtet, auf der Rückseite mit dem Trennmittel versehen und zu einer Rolle aufgewickelt, aus der Klebebandrollen geringerer Breite geschnitten werden.

## Beispiele 2 bis 8

Analog zu Beispiel 1 werden die in der folgenden Tabelle 1 angegebenen erfindungsgemäßen Klebebänder hergestellt (mit 1,5 Gewichtsteilen Hydrocerol). Die Komponentenangaben haben in den Beispielen folgende spezielle Bedeutung :

PP : PP-Homopolymerisat mit einem Schmelzindex 230/2.16 von etwa 5 g/10 min.

PP/PE : PP/PE-Copolymerisat (statistisches oder Block-Copolymerisat) mit einem Schmelzindex 230/2.16 von etwa 5 g/10 min. und einem Äthylengehalt von etwa 4 %.

PE : Polyäthylen niedriger Dichte mit einem Schmelzindex 190/5 von etwa 2-5 g/10 min.

PIB : Polyisobutylen mit einem mittleren Molekulargewicht von 100 000

EVA : Äthylen-Vinylacetat-Copolymerisat mit einem Vinylacetatgehalt von 45 %.

SBR : Styrol-Butadien-Blockcopolymerisat mit einem Styrolgehalt von 50 % mit einem Schmelzindex 230/2.16 von etwa 5-10 g/10 min.

EPM : Äthylen-Propylen-Polymerisat mit einem Äthylengehalt von 50 %, Schmelzindex 230/5 von etwa 5-10 g/10 min.

EPDM : Äthylen-Propylen-Dien-Terpolymerisat mit einem Äthylengehalt von 50 % mit einem Schmelzindex von etwa 5-10 g/10 min.

## Tabelle 1

| Beispiel Nr. | PP | PP/PE | PE | EPDM | PIB | EVA | SBR | Reckverhältnis in Bahnrichtung | senkrecht zur Bahnrichtung |
|---|---|---|---|---|---|---|---|---|---|
| 2 | 96 | | 4 | | | | | 1:2 | 1:4 |
| 3 | 40 | 45 | 15 | | | | | 1:2 | 1:5 |
| 4 | | 70 | 5 | 15 | 5 | 5 | | 1:2,5 | 1:6 |
| 5 | | 70 | 10 | | | 5 | 15 | 1:2,5 | 1:6,5 |
| 6 | | 75 | 5 | | | 5 | 15 | 1:3,5 | 1:5 |
| 7 | | 75 | 10 | | | 5 | 10 | 1:2 | 1:6 |
| 8 | | 90 | 5 | | | | 5 | 1:2 | 1:4,5 |

In Beispiel 4 wurde statt EPDM auch EPM mit dem gleichen Ergebnis verwendet.

In der folgenden Tabelle 2 sind die Eigenschaften der erfindungsgemäßen Klebebänder angegeben :

EP 0 129 809 B1

| Beispiel Nr. | | 1 | 2 | 3 | 4 | 5 | 6 | 7 | 8 |
|---|---|---|---|---|---|---|---|---|---|
| Dicke | (µm) | 110 | 110 | 110 | 110 | 110 | 90 | 150 | 110 |
| Dichte | (g/cm$^3$) | 0,50 | 0,50 | 0,50 | 0,50 | 0,50 | 0,48 | 0,52 | 0,50 |
| Zugfestigkeit | (N/mm$^2$) | | | | | | | | |
| in Bahnrichtung | | 11 | 12 | 10 | 12 | 16 | 18 | 15 | 11 |
| senkrecht zur Bahnrichtung | | 50 | 45 | 50 | 50 | 60 | 33 | 55 | 50 |
| Bruchdehnung | (%) | | | | | | | | |
| in Bahnrichtung | | 45 | 50 | 45 | 45 | 50 | 60 | 50 | 45 |
| senkrecht zur Bahnrichtung | | 15 | 20 | 15 | 15 | 20 | 15 | 15 | 20 |
| Schlagzugzähigkeit | (mJ/mm$^2$) | | | | | | | | |
| in Bahnrichtung | | 55 | 80 | 60 | 55 | 70 | 100 | 60 | 80 |
| senkrecht zur Bahnrichtung | | 175 | 110 | 150 | 150 | 200 | 100 | 180 | 140 |
| Weiterreißwiderstand | (N/mm) | | | | | | | | |
| Rißverlauf in Bahnrichtung | | 55 | 30 | 40 | 50 | 60 | 35 | 60 | 40 |
| Rißverlauf senkrecht zur Bahnrichtung | | 15 | 18 | 20 | 20 | 20 | 25 | 18 | 20 |

Die Messungen wurden nach den obengenannten, in der Beschreibung angegebenen Methoden durchgeführt.

EP 0 129 809 B1

## Beispiel 9

Aus der vollflächig mit druckempfindlicher Klebemasse und der Rückseitenbeschichtung versehenen Trägerbahn werden Befestigungsstreifen für Höschenwindelverschlüsse hergestellt. Dazu werden in Bahnrichtung Rollen von 5 cm Breite geschnitten. Die 5 cm breite Bahn der Rolle wird einer Querschneidevorrichtung zugeführt, die mit 2,5 cm Vorschub die Streifen (5 × 2,5 cm) senkrecht zur Bahnrichtung abschneidet. Die so erhaltenen Streifen besitzen in ihrer Längsrichtung, die der Richtung senkrecht zur Bahnrichtung der ursprünglichen Bahn entspricht, die oben angegebenen Festigkeitswerte.

## Beispiel 10

Aus einer streifenförmig in Bahnrichtung mit druckempfindlicher Klebemasse und entsprechend streifenförmig mit der Rückseitenbeschichtung versehenen Bahn werden verklebbare Tragegriffe hergestellt. Dazu wird die Bahn in der Weise streifenförmig beschichtet, daß nach Schneiden in Bahnrichtung Bänder gebildet werden die nur an den Seitenkanzen einen Klebstoffstreifen tragen, so daß der mittlere Bereich frei bleibt, wobei die Bandbreite 50 cm beträgt und die klebenden Bereiche an den Seiten jeweils 7 cm breit sind. Die 50 cm breite Bahn wird einer Querschneidevorrichtung zugeführt, die mit 2,5 cm Vorschub die Streifen (50 × 2,5 cm) senkrecht zur Bahnrichtung abschneidet. Die so erhaltenen Streifen besitzen in ihrer Längsrichtung, die der Richtung senkrecht zur Bahnrichtung der ursprünglichen Bahn entspricht, die oben angegebenen Festigkeitswerte. An beiden Enden sind die Streifen (Tragegriffe) 7 cm breit klebend beschichtet und können mit einem Gegenstand verklebt werden. Die zum Anfassen bestimmte Mitte ist klebstofffrei.

## Beispiel 11

Zur Herstellung von Fusselrollen mit denen Fusselroller bzw. Kleiderroller erhältlich sind, wird eine vollflächig mit druckempfindlicher Klebemasse und der Rückseitenbeschichtung versehene Bahn in Bahnrichtung in 10 cm breite Bänder von 2 m Länge geschnitten. Diese Bänder werden so auf einen Pappkern zu Rollen aufgewickelt, daß die Klebemassenbeschichtung außen liegt. Die nichtklebende Rückseite ist mit einem Streifen Doppelklebeband, das mit dem erfindungsgemäßen Träger erhalten wurde, auf den Pappkern geklebt.

Für Verpackungszwecke oder Isolierungen werden erfindungsgemäße nicht beschichtete Träger gemäß den Beispielen 2, 3 und 6 und für Trennmaterialien sowie Abdeckmaterialien, die einseitig oder beidseitig klebstoffabweisend beschichtet sind, werden Träger des Beispiels 6 bevorzugt.

Befestigungsstreifen für Höschenwindelverschlüsse und Tragegriffe bzw. Verstärkungen für Tragegriffe werden vorzugsweise aus Klebebändern der Beispiele 1,5 und 7 erhalten.

## Patentansprüche

1. Schaumfolie aus einem senkrecht zur Bahnrichtung stärker als in Bahnrichtung gerecktem, Polypropylen mit hohem isotaktischen Anteil als Hauptkomponente enthaltendem Material, dadurch gekennzeichnet, daß das Material geschäumt ist, einen Schlagzähzusatz mit einem Anteil von 1-25 Gewichtsprozent, bezogen auf den gesamten Polymeranteil, enthält und das Reckverhältnis in Bahnrichtung 1 : 1 bis 1 : 4 und senkrecht zur Bahnrichtung 1 : 3 bis 1 : 8 beträgt, wobei das Reckverhältnis senkrecht zur Bahnrichtung größer ist als das Reckverhältnis in Bahnrichtung und die Dichte 0,4-0,75 g/cm³ beträgt.

2. Folie gemäß Anspruch 1, dadurch gekennzeichnet, daß der Schlagzähzusatz Äthylen-Vinylacetat-Copolymer, Butadien-Styrol-Blockcopolymerisat oder thermoplastischer Kautschuk ist.

3. Folie gemäß Anspruch 1, dadurch gekennzeichnet, daß das Reckverhältnis in Bahnrichtung 1 : 2 bis 3 beträgt oder senkrecht zur Bahnrichtung 1 : 4 bis 6 beträgt.

4. Folie gemäß Anspruch 1, dadurch gekennzeichnet, daß das Material bis zu 98 % Polypropylen oder Polypropylencopolymere enthält.

5. Folie gemäß Anspruch 1, dadurch gekennzeichnet, daß das Material 2-30 % Polyäthylen oder EPM oder EPDM oder Polyisobutylen oder Gemische davon enthält.

6. Folie gemäß Anspruch 1, dadurch gekennzeichnet, daß sie mit einem Trennlack versehen ist.

7. Klebeband mit einem senkrecht zur Bahnrichtung stärker als in Bahnrichtung gerecktem, Polypropylen mit hohem isotaktischen Anteil als Hauptkomponente enthaltendem geschäumtem Trägermaterial, das mit mindestens einer druckempfindlichen oder heißsiegelbaren Klebeschicht versehen ist, dadurch gekennzeichnet, daß das Trägermaterial geschäumt ist, einen Schlagzähzusatz mit einem Anteil von 1-25 Gewichtsprozent, bezogen auf den gesamten Polymeranteil, enthält und das Reckverhältnis in Bahnrichtung 1 : 1 bis 1 : 4 und senkrecht zur Bahnrichtung 1 : 3 bis 1 : 8 beträgt, wobei das Reckverhältnis senkrecht zur Bahnrichtung größer ist als das Reckverhältnis in Bahnrichtung und die Dichte 0,4-0,75 g/cm³ beträgt.

8. Klebeband gemäß Anspruch 7, dadurch gekennzeichnet, daß der Schlagzähzusatz Äthylen-Vinylacetat-Copolymer, Butadien-Styrol-Blockcopolymerisat oder thermoplastischer Kautschuk ist.

9. Klebeband gemäß Anspruch 7, dadurch gekennzeichnet, daß das Reckverhältnis des Trägers in Bahnrichtung 1 : 2 bis 3 beträgt oder senkrecht zur Bahnrichtung 1 : 4 bis 6 beträgt.

10. Klebeband gemäß Anspruch 7, dadurch gekennzeichnet, daß der Träger bis zu 98 % Polypropylen oder Polypropylencopolymere enthält.

11. Klebeband gemäß Anspruch 7, dadurch gekennzeichnet, daß der Träger 2-30 % Polyäthylen oder EPM oder EPDM oder Polyisobutylen oder Gemische davon enthält.

12. Verwendung des Klebebandes gemäß Anspruch 7 als Fusselrolle.

13. Tragegriff, bestehend aus einem Abschnitt des Klebebandes gemäß Anspruch 7.

14. Verstärkung für Tragegriffe, bestehend aus einem Abschnitt des Klebebandes gemäß Anspruch 7.

15. Befestigungsstreifen, bestehend aus einem Abschnitt des Klebebandes gemäß Anspruch 7.

16. Befestigungsstreifen für Höschenwindelverschlüsse, bestehend aus einem Abschnitt des Klebebandes gemäß Anspruch 7.

17. Verfahren zur Herstellung von Abschnitten des Klebebandes gemäß Anspruch 7 durch Querschneiden senkrecht zur Bahnrichtung.

## Claims

1. Expanded film made from a material which has been drawn to a greater extent perpendicular to the web direction than in the web direction and which contains, as the principal component, polypropylene having a high isotactic content, characterized in that the material has been expanded and contains an impact modifier in a proportion of 1-25 per cent by weight, based on the total polymer content, and the draw ratio in the web direction is 1 : 1 to 1 : 4 and the draw ratio perpendicular to the web direction is 1 : 3 to 1 : 8, the draw ratio perpendicular to the web direction being greater than the draw ratio in the web direction, and the density is 0.4-0.75 g/cm$^3$.

2. Film according to Claim 1, characterized in that the impact modifier is an ethylene-vinyl acetate copolymer, a butadiene-styrene block copolymer or a thermoplastic rubber.

3. Film according to Claim 1, characterized in that the draw ratio in the web direction is 1 : 2 to 3 or the draw ratio perpendicular to the web direction is 1 : 4 to 6.

4. Film according to Claim 1, characterized in that the material contains up to 98 % of polypropylene or polypropylene copolymers.

5. Film according to Claim 1, characterized in that the material contains 2-30 % of polyethylene or EPM or EPDM or polyisobutylene or mixtures thereof.

6. Film according to Claim 1, characterized in that it is provided with a release coating.

7. Adhesive tape with an expanded backing material which is drawn to a greater extent perpendicular to the web direction than in the web direction and contains, as the principal component, polypropylene having a high isotactic content, which material has been provided with at least one pressure-sensitive or heat-sealable adhesive coating, characterized in that the backing material has been expanded and contains an impact modifier in a proportion of 1-25 per cent by weight, based on the total polymer content, and the draw ratio in the web direction is 1 : 1 to 1 : 4 and the draw ratio perpendicular to the web direction is 1 : 3 to 1 : 8, the draw ratio perpendicular to the web direction being greater than the draw ratio in the web direction, and the density is 0.4-0.75 g/cm$^3$.

8. Adhesive tape according to Claim 7, characterized in that the impact modifier is an ethylene-vinyl acetate copolymer, a butadiene-styrene block copolymer or a thermoplastic rubber.

9. Adhesive tape according to Claim 7, characterized in that the draw ratio of the backing in the web direction is 1 : 2 to 3 or the draw ratio perpendicular to the web direction is 1 : 4 to 6.

10. Adhesive tape according to Claim 7, characterized in that the backing contains up to 98 % of polypropylene or polypropylene copolymers.

11. Adhesive tape according to Claim 7, characterized in that the backing contains 2-30 % of polyethylene or EPM or EPDM or polyisobutylene or mixtures thereof.

12. Use of the adhesive tape according to Claim 7 as a fluff roll.

13. Carrying handle comprising the section of the adhesive tape according to Claim 7.

14. Reinforcement for carrying handles, comprising a section of the adhesive tape according to Claim 7.

15. Securing strip, comprising a section of the adhesive tape according to Claim 7.

16. Securing strip for closures for nappy pants, comprising a section of the adhesive tape according to Claim 7.

17. Process for the production of sections of the adhesive tape according to Claim 7 by cutting across perpendicular to the web direction.

## Revendications

1. Feuille expansée faite d'une matière contenant comme composant principal du polypropylène à haute proportion isotactique, étirée davantage perpendiculairement au sens de la nappe que dans le sens de la nappe, caractérisée en ce que la matière est expansée, contient un additif de résistance au choc en une proportion de 1 à 25 % en poids, sur la base de la proportion totale de polymère, et le rapport d'étirage est de 1 : 1 à 1 : 4 dans le sens de la nappe et de 1 : 3 à 1 : 8 perpendiculairement au sens de la nappe, étant entendu que le rapport d'étirage perpendiculairement au sens de la nappe est plus grand que le rapport d'étirage dans le sens de la nappe et que la masse volumique est de 0,4 à 0,75 g/cm³.

2. Feuille suivant la revendication 1, caractérisée en ce que l'additif de résistance au choc est un copolymère éthylène-acétate de vinyle, un copolymère séquencé butadiène-styrène ou un caoutchouc thermoplastique.

3. Feuille suivant la revendication 1, caractérisée en ce que le rapport d'étirage est de 1 : 2 à 3 dans le sens de la nappe et de 1 : 4 à 6 perpendiculairement au sens de la nappe.

4. Feuille suivant la revendication 1, caractérisée en ce que la matière contient jusqu'à 98 % de polypropylène ou de copolymère de propylène.

5. Feuille suivant la revendication 1, caractérisée en ce que la matière contient 2 à 30 % de polyéthylène ou de polymère éthylène-propylène ou de polymère éthylène-propylène-diène ou de polyisobutylène ou de mélanges de ceux-ci.

6. Feuille suivant la revendication 1, caractérisée en ce qu'elle est munie d'une laque anti-adhésive.

7. Bande adhésive comprenant une matière de support expansée contenant comme composant principal du polypropylène à haute proportion isotactique, étirée davantage perpendiculairement au sens de la nappe que dans le sens de la nappe, qui est munie d'au moins une couche d'adhésif sensible à la pression ou soudable à chaud, caractérisée en ce que la matière de support est expansée, contient un additif de résistance au choc en une proportion de 1 à 25 % en poids, sur la base de la proportion totale de polymère, et le rapport d'étirage est de 1 : 1 à 1 : 4 dans le sens de la nappe et de 1 : 3 à 1 : 8 perpendiculairement au sens de la nappe, étant entendu que le rapport d'étirage perpendiculairement au sens de la nappe est plus grand que le rapport d'étirage dans le sens de la nappe et que la masse volumique est de 0,4 à 0,75 g/cm³.

8. Bande adhésive suivant la revendication 7, caractérisée en ce que l'additif de résistance au choc est un copolymère éthylène-acétate de vinyle, un copolymère séquencé butadiène-styrène ou un caoutchouc thermoplastique.

9. Bande adhésive suivant la revendication 7, caractérisée en ce que le rapport d'étirage est de 1 : 2 à 3 dans le sens de la nappe et de 1 : 4 à 6 perpendiculairement au sens de la nappe.

10. Bande adhésive suivant la revendication 7, caractérisée en ce que le support contient jusqu'à 98 % de polypropylène ou de copolymère de propylène.

11. Bande adhésive suivant la revendication 7, caractérisée en ce que le support contient 2 à 30 % de polyéthylène ou de polymère éthylène-propylène ou de polymère éthylène-propylène-diène ou de polyisobutylène ou de mélanges de ceux-ci.

12. Utilisation de la bande adhésive suivant la revendication 7 comme rouleau dépoussiéreur.

13. Poignée de transport, consistant en une coupe de la bande adhésive suivant la revendication 7.

14. Renforcement pour poignée de transport, consistant en une coupe de la bande adhésive suivant la revendication 7.

15. Bande de fixation consistant en une coupe de la bande adhésive suivant la revendication 7.

16. Bande de fixation pour fermeture de couche culotte, consistant en une coupe de la bande adhésive suivant la revendication 7.

17. Procédé de fabrication de coupe de la bande adhésive suivant la revendication 7 par tranchage perpendiculairement au sens de la nappe.

EP 0 129 809 B1

2

1